# EUROPEAN PATENT APPLICATION

(11) **EP 3 035 740 A1**
(43) Date of publication of application: **22.06.2016**
(21) Application number: 14199385.7
(22) Date of filing: 19.12.2014
(51) Int. Cl.: H04W 48/20, H04W 12/12

(54) **Method for operating a wireless communication device in a cellular network**

(71) Applicant: Gemalto M2M GmbH, 81541 München (DE)
(72) Inventor: Simon, Carsten, 16761 Henningsdorf (DE)
(74) Representative: Grevin, Emmanuel

(57) **Abstract**

The present invention relates to a method for operating a wireless communication device configured to operate in a cellular network, and to operate in association with a base station, hereinafter the active base station, the cellular network comprising a plurality of network base stations, the method comprises the steps for the wireless communication device:
- determining at least one fake cell probability level by analyzing the signaling and/or behavior of at least one of said active base station and network base stations, said at least one fake cell probability level indicating the probability of being affected by a fake base station,
- taking a first measure for adaptation of cell-change criteria by taking into account said at least one fake cell probability level.

## Description

### FIELD OF THE INVENTION

The present invention relates to a method for operating a wireless communication device in a cellular network.

The invention also pertains to a wireless communication device using said method.

### BACKGROUND OF THE INVENTION

Generally, in the field of wireless communication according to wireless cellular technology standards like 3GPP (GSM, UMTS, LTE, etc.) there is a growing problem of illicitly acting users trying to interfere with wireless communication devices at their most vulnerable component: the air interface. It is known that those interferences comprise in particular fake base stations, so-called IMSI catchers, which pretend towards a wireless communication device to belong to a certain cellular network. Thus instead of providing a service the IMSI catcher allows recording and locating wireless communication devices resp. their identity represented by the SIM card. Known fake base stations are even capable of acting as man-in-the-middle to tap connections to other parties.

In particular in cellular networks supporting 2G technology standards, like GSM, GPRS and EDGE, it is known that there is a weakness in the verification procedure that only the wireless communication device needs to authenticate at the base stations of the cellular network, but not vice versa. Up to now there are still no counter-measures known in the 2G cellular networks to remove this weakness. Moreover this means that it is also possible to interfere with inherently more secure wireless communication devices operating in technology standard networks beyond 2G, by forcing the wireless communication device to switch to a 2G fake base station. This means, that the existing weakness of 2G networks also influences cellular networks of other technology standards.

Known solutions try to detect such situations and in particular warn the user of the wireless communication device. However, to merely detect a fake base station does not necessarily help the owner. Instead there is a need to find countermeasures which allow for the wireless communication device to ever leave the fake base station on its own or even better to avoid camping on fake base station.

It is therefore the goal of present invention to overcome mentioned shortcomings of known solutions and to propose a solution for a wireless communication device to cope with the situation that a fake base station might affect the wireless communication device.

Further alternative and advantageous solutions would, accordingly, be desirable in the art.

### SUMMARY OF THE INVENTION

For this it is according to a first aspect of the invention suggested a method for operating a wireless communication device according to claim 1. It is further suggested according to a second aspect of the invention a wireless communication device according to claim 10.

It is therefore according to the first aspect of the invention proposed a method for operating a wireless communication device configured to operate in a cellular network, and to operate in association with a base station, hereinafter the active base station,
the cellular network comprising a plurality of network base stations,
the method comprises the steps for the wireless communication device:
- determining at least one fake cell probability level by analyzing the signaling and/or behavior of at least one of said active base station and network base stations, said at least one fake cell probability level indicating the probability of being affected by a fake base station,
- taking a first measure for adaptation of cell-change criteria by taking into account said at least one fake cell probability level.

The inventive method concerns a wireless communication device which is already operating in association to a base station, hereinafter the active base station. The wireless communication device is in particular a mobile handset or a machine-to-machine (M2M) device configured to operated in a cellular network. The cellular network comprises a plurality of base stations. In particular the cellular network comprises a plurality of radio access networks (RAN), each supporting different cellular technology standards, in particular 2G, 3G, 4G or beyond. Preferably each base station is assigned to one of the radio access networks, whereby physically at the same installation more than one base station in particular supporting different RANs may be available. When the wireless communication device is already operating with the active base station, in particular it is camping on the active base station, it is from the outset not visible for the wireless communication device if the active base station is a real base station or a fake base station.

As the inventive method has to cope with potentially existing fake base stations in the proximity of the wireless communication device, in a first step it is to be figured out, if the active base station or another detectable network base station is a fake base station. For the wireless communication device each base station which pretends to belong to a certain cellular network is accepted as network base station, and hence needs to be analyzed. Therefore as a next step at least one fake cell probability level is determined based on the analysis of the signaling and other behavior of the examined base stations.

The fake cell probability level is a measure of how likely it is that the wireless communication device is affected by a fake base station. It is in particular at least one measure per analyzed base station, which depicts the probability that the analyzed base station is a fake base station.

Criteria for such fake cell probability level comprise in particular the behavior of the fake base station with respect to the usage of encryption, use of certain call control action patterns, SMS transmission or paging patterns, but also criteria with respect to the transmission power. Such behavioral criteria are principally based on the assumption that operations, which are rarely executed by base stations, like paging for an incoming call which requests the transmission of the IMSI (International Mobile Subscriber Identity) or IMEI (International Mobile Equipment Identity), followed by an immediate abortion of the call, are indicative for fake base stations. Due to the fact that such situations are nevertheless possible for real base stations, such behavioral criteria do not give a certainty that a fake base station is analyzed.

These and other criteria for determining the fake cell probability level are described in WO 2005/046277 A1, which is included here by reference.

It is in particular foreseen that for each analyzed base station a plurality of fake cell probability levels are determined. In particular for each analyzed criterion a single result, in particular probability value, is determined. In an advantageous embodiment these values are aggregated to a single fake cell probability value indicating a probability, preferably as a percentage, that the analyzed base station is a fake base station.

Preferably the step of determining the at least one fake cell probability level is carried out in conjunction with common cell-measurements which are done according to the known technology standards in preparation of a possible cell reselection. As part of the cell reselection the reception quality, in particular received signal strength, of the detectable base stations of the current cellular network is measured and a suitability ranking of each of these cells is created. This operation is preferably executed periodically.

Consequently after the step of determining the at least one fake cell probability level, the wireless communication device conducts the step of taking a measure for adaptation of cell-change criteria. Based on these cell-change criteria the wireless communication device decides if another base station is chosen or if it continues operation with the active base station.

As part of the inventive method the cell-change criteria are adapted taking into account the determined at least one fake cell probability level. Alternatively or additionally it is preferably foreseen that the step of taking measures is only conducted when the at least one fake cell probability level lies above a preconfigured threshold. As long as the proposed inventive method is not integrated into the common cell-measurements, this embodiment relieves the wireless communication device from additional tasks for most of the cases when no fake base station is in the proximity of the wireless communication device.

The cell-change criteria are those criteria with that the wireless communication device is fully capable to decide if a certain base station is used for camping or not.

According to a preferred embodiment it is proposed that the adaptation of cell-change criteria comprises considering at least one of the fake cell probability levels as cell-reselection criterion.

Thus the cell-change criteria basically rely on the cell-reselection criterion. This in particular comprises that for determining the mentioned suitability ranking the fake cell probability level is taken into account. In particular a high fake cell probability level leads to a reduction of the suitability of a base station for operation with the wireless communication device.

The invention in particular allows distinguishing between the situations that an increased fake cell probability level affects the active base station or a network base station.

It is therefore proposed according to a first preferred embodiment a method wherein said step of taking a measure comprises an adaptation of cell-change criteria suited for the wireless communication device to leave the active base station.

In another preferred embodiment it is proposed a method wherein the step of taking a measure comprises an adaptation of cell-change criteria suited for the wireless communication device to avoid a cell-change to said network base station.

As pointed out above, the adaptation of cell-change criteria in particular comprises an adaptation of cell-reselection criteria. With that the suitability ranking of the active base station and/or of the network base stations is modified in order to deter the wireless communication device from being associated with a fake base station.

It is further foreseen as part of the invention that a high fake cell probability concerning a base station different from the active base station leads to an increase of the suitability ranking for the active base station.

With those adaptations of the cell-change criteria it is reached the goal, that the wireless communication device leaves the active base station, which in particular means that it selects another base station for camping, or in the latter case the cell-change criteria urges the wireless communication device to remain on the active base station.

This embodiment is in particular advantageous as it is able to be carried out in conjunction with the cell-reselection procedures which are conducted anyhow periodically. It is plainly a modification of the determination of the cell-reselection criterion taking into account the fake cell probability level which leads to the desired effect according to the envisaged goal of the invention.

In a further preferred embodiment it is proposed a method wherein the adaptation of cell-change criteria comprises filtering out of at least one base station determined to be insecure.

This embodiment introduces another means for reducing the attractiveness of the analyzed base station to camp on it. According to that a base station which is found to be insecure is completely ruled out for a cell change.

This is in particular applicable both for the active base station and for network base stations, whereas if the active base station is ruled out due to the detected insecurity in any case a network base station is the one with highest suitability ranking. Hence this detection leads to a cell-change, as long as other network base stations are detectable.

A base station is in particular determined to be insecure, if at least one fake cell probability level exceeds a predetermined threshold. In case more than one fake cell probability levels are maintained it is in particular a good indication, if at least two of the fake cell probability levels indicate a behavior of the base station that is typical for fake base stations, but not for real network base stations.

Alternatively according to another embodiment it is proposed that said at least one base station is determined to be insecure if it supports a technology standard which is rated as insecure according to a preconfiguration step. With this embodiment all base stations are rated as insecure - and consequently filtered out - which support a certain technology standard. In particular those base stations supporting 2G radio access networks, like GSM, GPRS, EDGE, are prone of being affected by IMSI catchers. Therefore it would be insecure to make a cell-reselection to a 2G base station, if a higher risk of fake base stations is detected.

This embodiment is in particular advantageous as it does not require enhanced analysis of the concerned base stations, once an increased fake cell probability level is reached.

According to another advantageous embodiment it is suggested a method wherein the step of determining comprises analyzing the signaling and/or behavior of base stations belonging to a cellular network different from the one, the active base station is belonging to,
wherein the adaptation of cell-change criteria comprises the filtering out of those base stations identifying itself as being assigned to a cellular network rated as insecure.

With this embodiment the filtering of base stations as proposed above is even enhanced. Instead of filtering out base stations based on the supported technology standard, here it is proposed to filter base stations belonging to a cellular network as a whole. This is in particular advantageous in situations where no base station of the cellular network where the active base station is assigned to is detectable for the wireless communication device which appears secure. In that case it is proposed to completely leave the cellular network. This is in particular advantageous for the option, that the measures for adaptation of cell-change criteria are envisaged to leave the active base station.

As a matter of fact the wireless communication device has to be allowed to switch to the cellular network. As an indication for that it is in particular preferable to consult the incorporated SIM (subscriber identity module) which is supposed to hold a preferred network list, the so called PLMN selector list (according to 3GPP TS11.11) defining a priority of cellular networks, in particular for roaming situations. It is likely that if a cellular network is referred to in this list, it is allowed to switch to this cellular network.

With this embodiment the wireless communication device is in the position to take into account base stations of other cellular networks, once the fake cell probability level indicates that the decodable base stations of the current cellular network are suspected to be insecure.

This embodiment is in particular advantageous in conjunction with another embodiment, according to that the method further comprising the step:
if said first measure is not successful, taking a second measure for leaving the active base station, different from the first measure.

This embodiment suggests an escalation of measures, preferably in those situations where a first measure does not solve the situation. This is in particular the case when with the adaptation of the cell-reselection criterion based on the fake cell probability level in particular the active base station is not left. This is in particular the case when the active base station - as it is typical for an IMSI catcher - has a high signaling power and as such is by far the base station with the highest suitability ranking for the wireless communication device.

If in such a situation the next base station, in particular of a radio access network supporting a technology standard rated as secure, is not detectable, the first measure will most probably not result in that the wireless communication device leaves the active base station.

In that situation it is according to this embodiment determined if the previous step was successful to leave the active base station. This is in particular carried out with the proposed step of determining the fake cell probability level for the active base station. Consequently it is recalled which was the previous measure. Hence when still the active base station provides one or more high fake cell probability levels, then another measure is conducted. For the situation described before it is probably advantageous to check for decodable base stations of another cellular network.

As another measure which is preferably appropriate as a second measure in terms of an escalation it is proposed a method wherein said measure comprises for the wireless communication device termination of operation with the active base station.

As last resort the wireless communication device is then configured to switch off the operation with any base station, if it turns out that no reliable base station is available and thus it has to be assumed that the wireless communication device would have no capabilities to camp on a base station rated as secure. In this situation, in particular when the fake cell probability level, in particular of the active base station, exceeds a predefined threshold, it is safer to switch off operation. The human user of such a wireless communication device then has in response the chance to move to another location where potentially no IMSI catcher is available.

According to a second aspect of the invention it is proposed a wireless communication device configured to operate in a cellular network, the cellular network comprising a plurality of network base stations, the wireless communication device is further configured to operate in association with a base station, hereinafter the active base station,
the wireless communication device is configured to maintain cell-change criteria for selection of the active base station, and
- to determine at least one fake cell probability level by analyzing the signaling and/or behavior of at least one of said active base stations and network base stations, said at least one fake cell probability level indicating the probability of being affected by a fake base station, and
- to take a first measure for adaptation of cell-change criteria by taking into account said at least one fake cell probability level.

The second aspect of the invention shares the advantages of the first aspect.

As it is shown this invention advantageously solves the depicted problem and provides a solution that for different situations of a fake base station affecting a wireless communication device, the wireless communication device is put in the position to act accordingly and at least has the capabilities to leave the fake base station or avoid camping on another fake base station.

### BRIEF DESCRIPTION OF THE DRAWINGS

The following description and the annexed drawings set forth in detail certain illustrative aspects and are indicative of a few of the various ways in which the principles of the embodiments may be employed. Characteristics and advantages of the present invention will appear when reading the following description and annexed drawings of advantageous embodiments given as illustrative but not restrictive examples.
- Fig. 1a: shows a wireless communication device of the type to which the present invention is applied as an embodiment in conjunction with a fake base station;
- Fig. 1b: shows a wireless communication device of the type to which the present invention is applied as another embodiment in conjunction with a fake base station in another relationship;
- Fig. 2: represents a situation according to the prior art of the suitability ranking of base stations in conjunction with a wireless communication device;
- Fig. 3: represents a situation of the suitability ranking of base stations in conjunction with a wireless communication device according to an embodiment of the invention;
- Fig. 4: represents a situation of the suitability ranking of base stations in conjunction with a wireless communication device according to another embodiment of the invention;
- Fig. 5: shows a flow chart depicting one embodiment of the inventive method;
- Fig. 6: represents a flow chart depicting another embodiment of the inventive method;

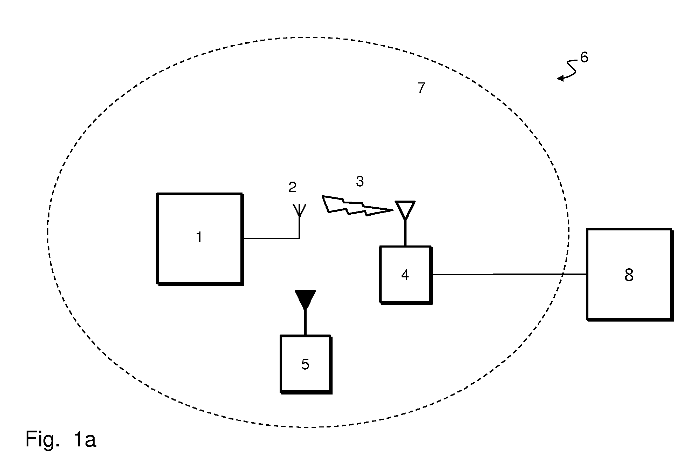

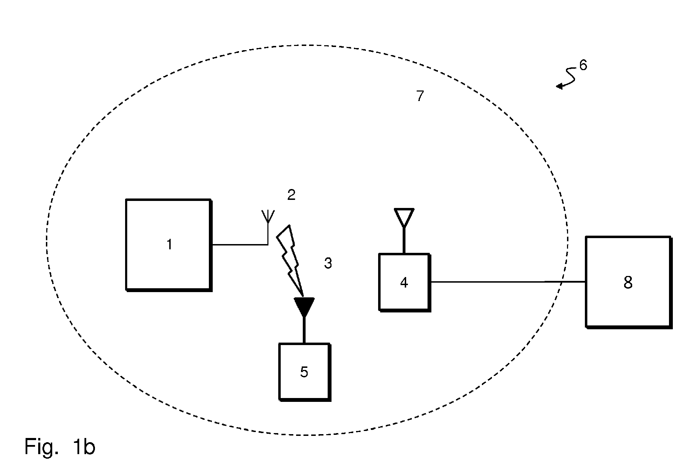

FIG. 1 a schematically shows a wireless communication device 1 of the type to which the present invention is applied as an embodiment. The wireless communication device 1 is shown in spatial relationship to a cell 7 of a cellular network 6, wherein a network base station 4 provides the counterpart on the air interface 3 between the wireless communication device and the cellular network. The network base station 4 is further connected to the core network 8 of the cellular network 6, which provides the communication connections to other devices, either via internet, or in the same or another cellular network.

Further available in the coverage area of the cell 7 is a fake base station 5. This fake base station 5 behaves toward wireless communication devices as if it were a regular base station of a cellular network. But it primarily records which wireless communication devices are in proximity of the fake base station. Such fake base stations are commonly known as IMSI catcher.

In the situation shown in FIG. 1a the wireless communication device 1 is associated to network base station 4. This in particular means the wireless communication device 1 is camping on the network base station 4.

In contrast FIG. 1b shows the same situation with the only difference that here the wireless communication device 1 is already camping on the fake base station. For advanced embodiments of IMSI catchers, in particular those configured to act as a man-in-the-middle, the wireless communication device would even in case of a voice or data connection not detect to be associated to a fake base station. This is moreover disadvantageous as such fake base stations are even able to tap the connection.

For the situation of FIG. 1a it is therefore a goal to avoid that e.g. in conjunction with a cell-reselection procedure the wireless communication device 1 selects the fake base station 5 for camping. For the situation of FIG. 1b it is the goal to leave the fake base station 5, but still to reach a base station which allows communication with the cellular network and consequently outside devices.

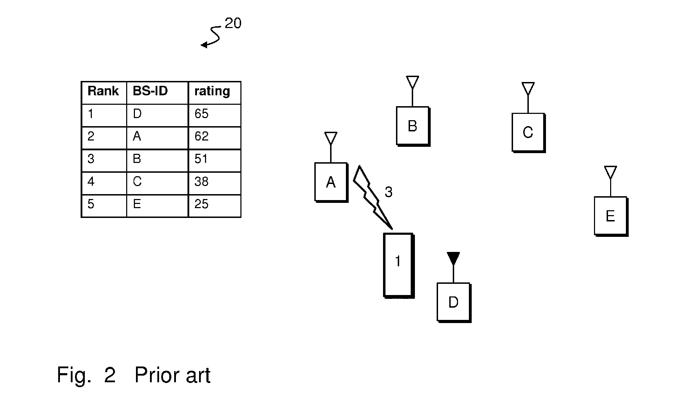

FIG. 2 shows according to the prior art the suitability ranking executed by a wireless communication device 1 situated in an area with a plurality of base stations A-E. For the wireless communication device it is in the outset not visible if the base stations are fake base stations or real base stations belonging to a cellular network. So, each of them are considered as network base stations.

The shown base stations provide the following characteristics: Base station A is the base station the wireless communication device 1 is currently camping on, indicated by air interface 3. It is a 2G base station. Base station B is another 2G base station, situated in a larger distance to the wireless communication device 1, thus the wireless communication device retrieves a lower signalling power from base station B than from base station A.

Base station C and E are 3G base stations, denominated as nodeBs, where base station C is situated closer to the wireless communication device than base station E.

For simplicity reasons it is assumed that with a larger distance the signalling power received at the wireless communication device from all base stations is linearly reduced and all base stations submit with the same signalling power.

Finally base station D is an IMSI catcher, that is a fake base station. It pretends to support the same 2G radio access network from the same cellular network like base station A and B. The wireless communication device 1 retrieves from base station D a higher signalling power than from any other base station. It is both possible that this is due to a higher transmission power or due to a shorter distance to wireless communication device 1. It is not uncommon that IMSI catchers try to reach as many wireless communication devices as possible through a high transmission power. On the other hand this might be another indication for increasing the fake cell probability level.

When in the situation depicted in FIG. 2 the wireless communication device carries out periodical cell measurements as a preparation for a potential cell-reselection, it results in suitability ranking table 20, which is shown as an example. Here for each base station A-E detectable for the wireless communication device 1, depicted by the base station ID (BS-ID) A-E, a suitability rating is determined. The suitability rating is based on the received signalling power of each base station. In reality the suitability ranking is influenced by far more than this one criterion, but for showing the principle of this embodiment of the invention it is sufficient to consider only the signalling power.

Based on the suitability ratings the suitability ranking is defined following the rule, the higher the rating the higher the ranking. It turns out, that the fake base station D is the most attractive, and therefore highest ranked base station for the wireless communication device 1 to camp on. The other base stations follow in the succession with suitability ratings resulting from the distance between wireless communication device 1 and the respective base station.

This means, if certain further conditions, like hysteresis, time-bars etc. are respected, the wireless communication device would most probably soon execute a cell-reselection and camp on fake base station D. This also means, only by increasing the transmission power at the IMSI catcher, all wireless communication devices in certain proximity of the fake base station would be trapped and hence urged to switch to the fake base station.

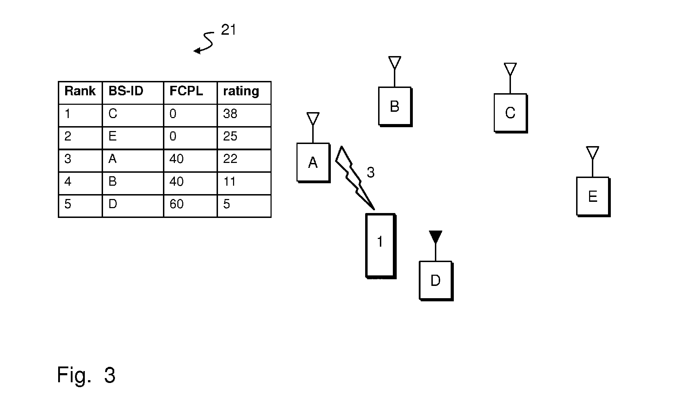

FIG. 3 shows the same situation for a wireless communication device 1 according to an exemplifying embodiment of present invention. The wireless communication device 1 is situated exactly in the same location in relationship to base stations A-E as in FIG. 2. With the application of the inventive method the suitability ranking table 21 now appears differently.

This is due to the first step of determining fake cell probability levels (FCPL) for each base station. In this simplified but not limiting example it is only one fake cell probability level per base station which is calculated. This fake cell probability level is expressed in a probability value below or equal to 100%.

Base stations A and B both indicate that they are part of a 2G radio access network. 2G radio access networks are according to a preconfiguration of the wireless communication device 1 rated as insecure. This increases the fake cell probability level for both base stations to a value of 40%. Consequently the suitability rating compared to the one of FIG. 2 is decreased by a value of 40. Any other translations of the FCPL to a deduction of the suitability ranking would also be covered by the invention.

For the base stations E, D as part of a 3G radio access network no deductions on the suitability rating are necessary as there is no indication that they would be fake base stations. Consequently their FCPL results to 0, and the suitability rating remains unchanged.

For base station D it is determined on the one hand that it pretends to belong to a 2G radio access network. This leads to a FCPL of 40%. Additionally its behaviour, in particular the amount of transmission power is another indication that this base station could be a fake base station. Other indications, like an empty list of neighbour cells etc. can also lead to this determination. Due to the fact that the wireless communication device 1 is not camping on the base station D, some behavioural indications for a fake base station, like requesting an IMSI as part of an incoming call, immediately followed by an abortion, are not possible in this situation. However this would be a possible indication for a situation as depicted in FIG 1 b.

As a result, the FCPL for base station D is increased by another 20%, resulting in a FCPL of 60%.

Still a fake cell probability level of 60% gives the wireless communication no certainty about if base station D is a fake base station or just a strong 2G base station.

Nevertheless for the wireless communication device 1 the suitability ranking now indicates that base station C has the highest suitability ranking and thus the wireless communication device 1 would perform a cell-reselection to camp on base station C. This shows how the wireless communication device 1 according to an embodiment of the invention is capable to avoid camping on the base station D, without actually knowing for sure if it is a fake base station or not.

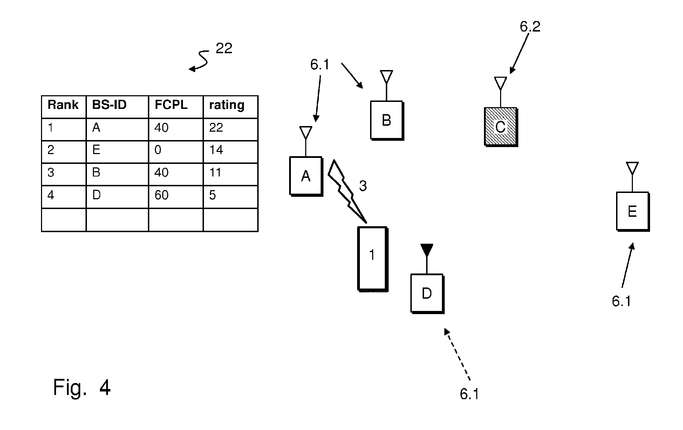

In FIG. 4 it is shown another advantageous embodiment of present invention. The difference to the previous FIG.s 2 and 3 is, that base station C belongs to another cellular network 6.2 and base station E is situated in a larger distance to wireless communication device 1.

This results in a suitability ranking table 22. For base stations A, B, D the same FCPLs and suitability ratings are calculated. Base station E has due to the larger distance to the wireless communication device 1 a reduced rating of 14, and still no indication of being a fake base station.

Due to the fact that base station C is not part of the cellular network 6.1, where A, B and E belong to, and D pretends to belong to, the wireless communication device 1 is not taking into account base station C as part of the cell-reselection preparation.

The resulting suitability ranking table 22 shows, that now the active base station A is ranked highest followed by base station E. However, the rating of 22 is on a rather low level. According to preconfigurations of the wireless communication devices this could mean that the base station is not sufficiently decidable. At least for base station E with a suitability rating of 15 this is the case. According to a special configuration of wireless communication device 1 the indication of a detectable base station with a FCPL of 40% is beyond a predefined threshold, and consequently base stations supporting an insecure technology standard, like 2G, are filtered out. Hence wireless communication device 1 would not be able to receive a sufficiently reliable service from a base station of cellular network 6.1. In effect, the first measure for adaptation of cell-change criteria of the wireless communication device does not lead to a solution. According to this embodiment another measure is preferably taken.

Therefore, in particular after checking if the cellular network 6.2 of base station C is accessible for the wireless communication device, the wireless communication device 1 leaves the cellular network 6.1 and changes to the cellular network 6.2. Here base station C has a suitability ranking of 38 (unchanged compared to table 21 from FIG. 3), and is therefore suitable to camp on. Therefore wireless communication device 1 switches from base station A to base station C of cellular network 6.2. Effectively the situation is now solved and from the perspective of the wireless communication device it is successfully avoided camping on a fake base station in direct proximity of the wireless communication device 1.

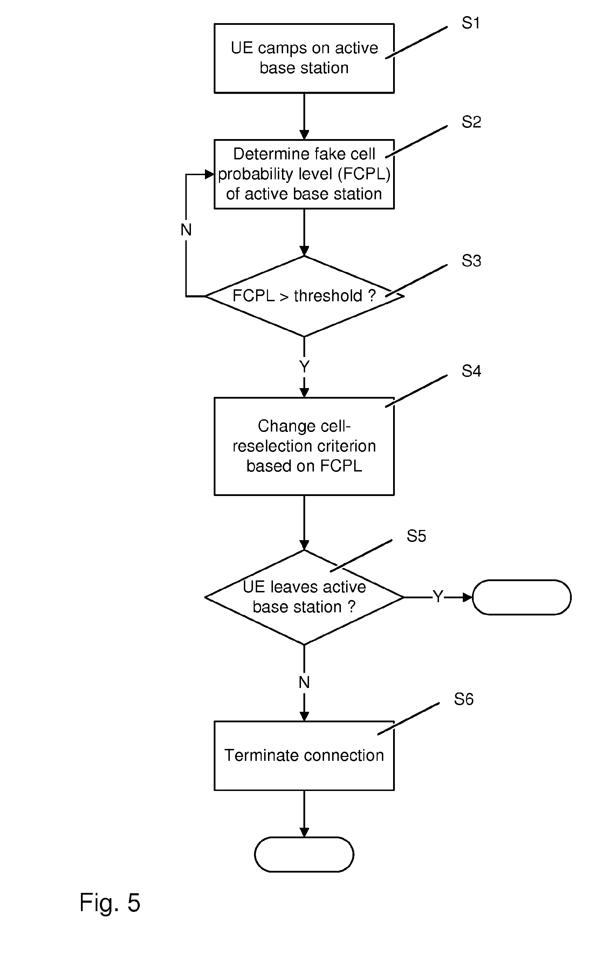

FIG. 5 shows a flow chart of one preferred embodiment of the inventive method. The flow charts starts in step S1 with a wireless communication device (UE - user equipment) which is camping on an active base station. Camping in this context means that, in particular after powering on, the wireless communication device first selects an appropriate cellular network that it will register with. Then it selects a cell, resp. the base station of a cell, receives broadcasted information from this base station, in particular including the cellular network the base station belongs to and a cell-ID, and then sends a registration request. When this is approved by the base station, the wireless communication device is operating in idle mode in association to this base station.

Alternatively the wireless communication device previously camped on another base station of the same cellular network and by way of cell-reselection mechanism changed to the current base station. The base station the wireless communication device is camping on is hereinafter called the active base station.

After that in step S2 it is determined the fake cell probability level (FCPL) of the active base station. As part of this a couple of characteristics of the active base station, in particular the signalling power, behavioural characteristics etc. are analyzed. This leads to one or more fake cell probability levels for the active base station. For simplicity reasons for this exemplifying embodiment it is assumed that exactly one fake cell probability level is determined.

Once the fake cell probability level is determined it is then checked in step S3 if the fake cell probability level is larger than a predefined threshold. With this threshold it is defined when a critical situation is reached in that sense, that it is recommended to take measures to leave the active base station. The absolute value of the threshold according to this preconfiguration is in particular defined as part of field tests. It is further foreseen to introduce different thresholds for different warning levels.

As part of the cell-reselection procedure, the wireless communication device periodically receives signalling from other base stations. Those preparatory steps for a cell-reselection are dedicated for a quick reaction in case the signalling from the active base station should become too weak, in particular when the wireless communication device is moving.

Those cell-reselection criteria are in step S4 in response to an increase of the fake cell probability level adapted based on the fake cell probability level. For this it is in particular foreseen to evaluate the fake cell probability level for the neighbour base stations as well. As a matter of fact, the fake cell probability level of base stations, which are not active base stations, is determined based on less criteria, in this respect it is feasible to determine for each detectable base station of the cellular network the fake cell probability level. This allows adapting the cell-reselection criteria taking into account this determined fake cell probability level of the neighbour base stations and the active base station.

Once the cell-reselection criteria are determined, the wireless communication device decides with which base station it wants to continue to operate. This is typically the one with the best suitability ranking, which is determined based on the cell-reselection criteria.

In step S5 it is then checked if as an outcome of the cell-reselection procedure the wireless communication device has left the association to the active base station, which was found as likely being a fake base station.

If this is the case, the operation is successful and terminates, which means the operation on the found base station continues. The new base station, where the wireless communication device is now camping on, is rated as secure compared to the previous active base station.

If the wireless communication device did not leave the active base station, then it shows, that the first measure of handling the detection of a fake base station failed. Hence, a second measure needs to be chosen, which is different from the first measure.

In this embodiment it is in step S6 chosen to terminate the connection to be on the safe side. This is a kind of last resort for a wireless communication device, in particular applicable when no base station is available, which is rated as secure enough. Thus it turns out that no communication is possible.

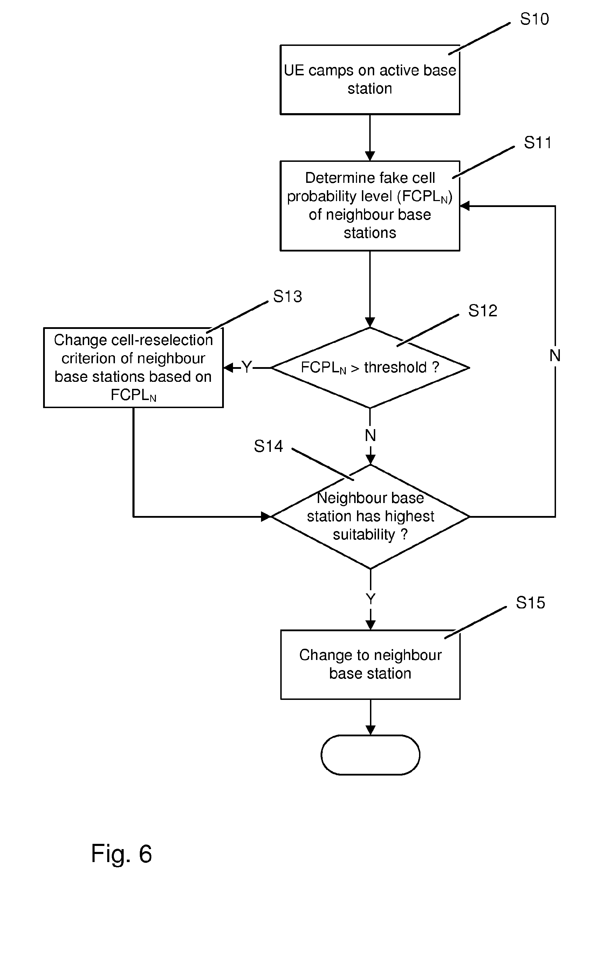

In FIG. 6 it is shown another exemplary embodiment of present invention as a flow diagram. Here in step S10 it again starts with a wireless communication device camping on a base station, like in step S1 of FIG. 5. Then in step S11 it is determined the fake cell probability level of the neighbour base stations. As shown in FIG. 5 the wireless communication device determines the suitability of detectable base stations for a cell-reselection periodically. In particular as part of this task, the wireless communication device additionally determines for all detectable neighbour base stations the fake cell probability level (FCPL_{N}). Additionally it is preferable to determine the fake cell probability level of the active base station as well.

In step S12 it is then checked if at least one FCPL_{N} is above the predefined threshold, which defines an increased probability of a fake base station, as described above. If this is the case, then the procedure branches to step S13.

In this step the cell-reselection criteria for the neighbour base stations are modified taking into account the determined FCPL_{N} values. This modifies the suitability ranking maintained by the wireless communication device and as such diminishes the tendency to switch to a fake base station. In particular when a fake base station is transmitting with high energy, which is an indication for a fake base station, the suitability rating needs to be reduced by an appropriate amount which counterbalances the high suitability ranking of the submitted high energy.

It is even more advantageous if the deduction of the suitability ranking is in such cases dependant from the amount of transmission power.

Step S13 modifies the anyhow existing suitability ranking. Step S14 expects such suitability ranking, be it unchanged, when it is directly branched from step S12 to S14, or modified as in step S13.

In S14 it is now checked if a neighbour base station has a higher suitability ranking then the active base station. Of course, the suitability ranking of the active base station may also be modified due to an increased fake cell probability level, as shown for FIG. 5.

For the situation that still one of the neighbour base stations, where a high fake cell probability level was detected, provides the highest suitability, another checking step is preferably introduced. In this step those base stations are filtered out which provide a fake cell probability level above a predefined second threshold. In particular this second threshold is higher than the first threshold used in step S12.

If a neighbour base station has a higher suitability ranking than the active base station, the procedure branches to step S15 and the wireless communication device changes to the respective neighbour base station with the highest suitability ranking.

From there generally the process may start anew after a predefined period. Otherwise the wireless communication device maintains its association to the active base station and continues in step S11, as well after a predefined period.

This embodiment illustrates how the inventive method is advantageously integrated in procedures known from the common technology standards, and as such the wireless communication device can quickly react on the risk of being concerned by a fake base station, without a big overhead of the normal operation.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. The above detailed description is, therefore, not to be taken in a limiting sense, and the scope of the present invention is defined only by the appended claims, appropriately interpreted, along with the full range of equivalents to which the claims are entitled.

## Claims

1. Method for operating a wireless communication device (1) configured to operate in a cellular network (6), and to operate in association with a base station (4), hereinafter the active base station,
the cellular network (6) comprising a plurality of network base stations,
the method comprises the steps for the wireless communication device (1):
- determining at least one fake cell probability level by analyzing the signaling and/or behavior of at least one of said active base station and network base stations, said at least one fake cell probability level indicating the probability of being affected by a fake base station (5),
- taking a first measure for adaptation of cell-change criteria by taking into account said at least one fake cell probability level.

2. Method according to claim 1,
wherein said step of taking a measure comprises an adaptation of cell-change criteria suited for the wireless communication device (1) to leave the active base station.

3. Method according to at least one of the previous claims,
wherein the step of taking a measure comprises an adaptation of cell-change criteria suited for the wireless communication device (1) to avoid a cell-change to said network base station (4).

4. Method according to at least one of the previous claims,
wherein the adaptation of cell-change criteria comprises considering at least one of the fake cell probability levels as cell-reselection criterion.

5. Method according to at least one of the previous claims,
wherein the adaptation of cell-change criteria comprises filtering out of at least one base station (4) determined to be insecure.

6. Method according to claim 5,
wherein said at least one base station (4) is determined to be insecure if it supports a technology standard which is rated as insecure according to a preconfiguration step.

7. Method according to at least one of the previous claims,
wherein the step of determining comprises analyzing the signaling and/or behavior of base stations (4) belonging to a cellular network (6.2) different from the one, the active base station is belonging to,
wherein the adaptation of cell-change criteria comprises the filtering out of those base stations (4) identifying itself as being assigned to a cellular network (6.1) rated as insecure.

8. Method according to at least one of the previous claims,
wherein said measure comprises for the wireless communication device (1) termination of operation with the active base station.

9. Method according to at least one of the previous claims,
further comprising the step:
if said first measure is not successful, taking a second measure for leaving the active base station, different from the first measure.

10. Wireless communication device (1) configured to operate in a cellular network (6), the cellular network (6) comprising a plurality of network base stations, the wireless communication device (1) is further configured to operate in association with a base station (4), hereinafter the active base station,
the wireless communication device (1) is configured to maintain cell-change criteria for selection of the active base station, and
- to determine at least one fake cell probability level by analyzing the signaling and/or behavior of at least one of said active base stations and network base stations, said at least one fake cell probability level indicating the probability of being affected by a fake base station (5), and
- to take a first measure for adaptation of cell-change criteria by taking into account said at least one fake cell probability level.

11. Wireless communication device (1) according to claim 10,
wherein said measures for adaptation of cell-change criteria are suited for the wireless communication device (1) to leave the active base station.

12. Wireless communication device (1) according to at least one of the claims 10 to 11,
wherein said measures for adapting of cell-change criteria are suited for the wireless communication device (1) to avoid a cell-change to said other base station (4).

13. Wireless communication device (1) according to at least one of the claims 10 to 12,
wherein said measures for adaptation of cell-change criteria comprise at least one out of the group:
- considering at least one of the fake cell probability levels as cell-reselection criterion,
- filtering out of at least one base station (4) determined to be insecure based on the technology standard supported by the base station according to a preconfiguration of insecure technology standards, and
- filtering out of those base stations identifying itself as being assigned to a cellular network (6) rated as insecure.

14. Wireless communication device (1) according to at least one of the claims 10 to 13,
wherein said measures comprise to terminate operation with the active base station.

15. Wireless communication device (1) according to at least one of the claims 10 to 14, wherein if said first measure is not successful, the wireless communication device is further configured to take a second measure for leaving the active base station, different from the first measure.
